(19) Europäisches Patentamt

European Patent Office

Office européen des brevets

(11) **EP 1 040 284 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(21) Anmeldenummer: **98966306.7**

(22) Anmeldetag: **12.12.1998**

(51) Int Cl.⁷: **F16H 1/28**

(86) Internationale Anmeldenummer:
**PCT/EP98/08116**

(87) Internationale Veröffentlichungsnummer:
**WO 99/32801 (01.07.1999 Gazette 1999/26)**

(54) **PLANETENGETRIEBE**

PLANETARY GEAR

ENGRENAGE PLANETAIRE

(84) Benannte Vertragsstaaten:
**DE FR GB IT SE**

(30) Priorität: **20.12.1997 DE 19756966**

(43) Veröffentlichungstag der Anmeldung:
**04.10.2000 Patentblatt 2000/40**

(73) Patentinhaber: **ZF FRIEDRICHSHAFEN Aktiengesellschaft**
**88038 Friedrichshafen (DE)**

(72) Erfinder: **SCHULZ, Horst**
**D-88045 Friedrichshafen (DE)**

(56) Entgegenhaltungen:
**WO-A-87/06671          DE-A- 2 941 553**
**DE-A- 19 603 004       GB-A- 804 223**
**GB-A- 980 089**

**Beschreibung**

Die Erfindung betrifft ein Planetengetriebe mit einem auf einer Zentralwelle angeordneten Sonnenrad, mindestens einem Hohlrad, einem Planetenträger mit einer darin gelagerten Gruppe von Stufenplaneten mit großen und kleinen Stufenrädern, deren große Stufenräder mit dem Sonnenrad in Eingriff stehen, und wobei das Sonnenrad radial fliegend in den Zahneingriffen mit den großen Stufenrädern gelagert ist, sowie ein Verfahren zur Einstellung und Montage des Planetengetriebes.

Derartige Getriebe werden vorzugsweise in der Handhabungstechnik verwendet. Die radial fliegende Lagerung des Sonnenrads bewirkt eine sehr gleichmäßige Lastaufteilung auf die Leistungszweige der verschiedenen Stufenplaneten. Teilungsfehler in den Zahnrädern eines der Leistungszweige, die auch mit hohem Fertigungsaufwand nicht völlig vermeidbar sind, führen zu einer kurzzeitigen geringfügigen Ausweichbewegung des Sonnenrads und wirken sich am Abtrieb kaum aus, so daß eine sehr hohe Übertragungstreue erzielt wird. Winkelstellungsfehler in einem Leistungszweig führen jedoch zu einer unerwünschten dauerhaften Außermittigkeit des Sonnenrads, was eine Verkippung der zentralen Antriebswelle zur Folge hat.

In der DE 196 03 004 A1 der Anmelderin ist ein gattungsgemäßes Planetengetriebe offenbart, bei dem die Drehstellung der Stufenräder eines Stufenplaneten über eine verdrehbar montierbare Flanschverbindung einstellbar gestaltet ist. Diese Ausgestaltung ermöglicht zwar eine exakte Mitteneinstellung des Sonnenrads, bedingt jedoch eine hohe Teilezahl und einen relativ hohen Montageaufwand.

In der nicht vorveröffentlichten älteren Anmeldung DE 197 20 255 der Anmelderin ist ein Planetengetriebe offenbart, bei dem die relative Drehstellung von zwei im Betrieb drehfest miteinander verbundenen Stufenrädern eines Stufenplaneten einstellbar ausgebildet ist. Ein vorgeschlagenes Verfahren ist, die Dreheinstellbarkeit durch eine einmalig justierbare Wellen - Nabenverbindung wie Kleben oder thermisches Aufschrumpfen herzustellen. Es birgt jedoch den Nachteil, daß eine Nachjustage unmöglich ist.

In der DE 29 41 553 A1 ist ein leistungsverzweigtes Getriebe offenbart, bei dem die Winkellage in einem Leistungszweig durch eine Verbindungsbüchse mit zwei Verzahnungen unterschiedlicher Zähnezahl einstellbar ist, wobei die Differenz der Zähnezahlen vorzugsweise klein ist und insbesondere eins ist. Bei der Montage der Verbindungsbüchse ist eine feine Winkeleinstellbarkeit gegeben. Die Verbindungsbüchse stellt jedoch ein weiteres Glied im Drehmomentenfluß dar, welches sich auf die Teilezahl, die Zahl der Verbindungsstellen und das Drehspiel negativ auswirkt.

Aufgabe der Erfindung ist, ein Planetengetriebe der eingangs genannten Art so auszubilden, daß die Mitteneinstellung des Sonnenrads auf einfache Art und Weise, kostengünstig und mit einer geringen Teilezahl, wiederholbar ermöglicht ist.

Die Aufgabe wird durch ein Planetengetriebe mit den Merkmalen des Hauptanspruchs gelöst. Vorteilhafte Ausgestaltungen sind durch die abhängigen Ansprüche gegeben. Die Verfahrensansprüche beziehen sich auf vorteilhafte Einstell- und Montageverfahren für ein erfindungsgemäßes Planetengetriebe.

Erfindungsgemäß wird vorgeschlagen, daß die Zähnezahl der großen Stufenräder nicht ganzzahlig durch die Zähnezahl der kleinen Stufenräder teilbar ist, um eine radiale Einstellbarkeit des Sonnenrads allein durch verschiedene Drehstellungen bei der Montage der Stufenplaneten (4, 6) zu erzielen. Wie im weiteren näher ausgeführt, läßt es sich zeigen, daß verschiedene Drehstellungen bei der Montage der Stufenplaneten eine Winkelauflösung zwischen den beiden Stufenrädern eines Stufenplaneten von

$$\Lambda\alpha = \frac{360°}{N1 \times N2} \times \text{GGT}(N1, N2)$$

ergeben, wobei N1 und N2 die Zähnezahlen der Stufenräder der Stufenplaneten sind und GGT(N1,N2) der größte gemeinsame Teiler der Zähnezahlen N1 und N2 ist. Vorteilhaft ist, daß die Stufenplaneten einteilig gefertigt werden können, ohne auf eine Stellungszuordnung der beiden Stufenräder achten zu müssen, und daß die Einstellbarkeit auch zu jedem späteren Zeitpunkt möglich ist. Es sind keine Mittel zur Einstellung der relativen Drehstellung der Stufenräder eines Stufenplaneten notwendig.

Die feinste Winkelauflösung ist erzielbar, wenn der größte gemeinsame Teiler der Zähnezahlen der großen und kleinen Stufenräder der Stufenplaneten, die in gleichzeitigem Zahneingriff mit dem Sonnenrad sind, gleich eins ist.

Eine Ausgestaltung der Erfindung sieht vor, daß die Zentralwelle in axialem Abstand vom Sonnenrad durch ein in begrenztem Maß winkelbewegliches Lager gelagert ist, um eine radiale Ausweichbewegung des Sonnenrads auf einfache Art und Weise zu ermöglichen.

In einer vorteilhaften Ausgestaltung der Erfindung sind die Stufenplanetenachsen parallel zur Zentralwelle angeordnet, die axiale Position der Stufenplaneten individuell einstellbar, das Sonnenrad und die großen Stufenräder der Stufenplaneten zylindrisch ausgebildet, und die kleinen Stufenräder der Stufenplaneten konisch ausgebildet. Hierdurch läßt sich das Verzahnungsspiel an dem kleinen Stufenrad jedes Stufenplaneten individuell auf einen minimalen Wert einstellen, so daß insgesamt eine praktisch spielfreie Übertragung erzielt wird. Aufgrund der parallelen Wellenanordnung und der zylindrischen Verzahnungen von Sonnenrad und großen Stufenrädern der Stufenplaneten wirkt sich eine axiale Verschiebung nicht auf die Eingriffsverhältnisse zwischen Sonnenrad und den großen Stufenrädern aus.

In einer weiteren Ausgestaltung der Erfindung sind die großen und kleinen Stufenräder der Stufenplaneten schrägverzahnt ausgebildet und weisen unterschiedliche Steigungshöhen der Schraubenlinien ihrer Zahnflanken auf. Eine axiale Verschiebung des Stufenplaneten führt zu einer gewünschten Relativverdrehung im Leistungszweig dieses Stufenplaneten. Diese Relativverdrehung kann dazu genutzt werden, um die Mittenstellung des Sonnenrads fein einzustellen, wenn die durch die Zähnezahlen bestimmte, endliche Winkelauflösung nicht ausreichend ist. Es hat sich gezeigt, daß bei genügend großen Zähnezahlen der großen und kleinen Stufenräder die durch die Winkelauflösung bedingte Abweichung von der optimalen Spielfrei-Einstellung vernachlässigbar klein und ohne merkliche Auswirkung auf das gesamte Getriebespiel ist.

Im Gegensatz dazu hat eine Ausgestaltung der Erfindung, bei der die großen und kleinen Stufenräder der Stufenplaneten gleiche Steigungshöhen der Schraubenlinien der Zahnflanken aufweisen, den Vorteil, daß eine axiale Verschiebung des Stufenplaneten ohne Auswirkung auf die Stellung des Sonnenrads bleibt. Dies gilt natürlich auch für den Spezialfall, wenn die die Stufenräder geradverzahnt sind.

Schließlich sind bei einer vorteilhaften Ausführungsform eines erfindungsgemäßen Planetengetriebes zwei Gruppen von Stufenplaneten vorgesehen, wobei alle Stufenplaneten in dem gemeinsamen Planetenträger gelagert sind. Die Anzahl der Stufenplaneten einer zweiten Gruppe entspricht der halben Anzahl der Stufenplaneten einer ersten Gruppe. Alle großen Stufenräder der Stufenplaneten der zweiten Gruppe stehen mit dem Sonnenrad in Eingriff und die kleinen Stufenräder der Stufenplaneten der zweiten Gruppe stehen gleichzeitig mit einem Paar von benachbarten großen Stufenrädern der Stufenplaneten der ersten Gruppe in Eingriff. Alle kleinen Stufenräder der Stufenplaneten der ersten Gruppe stehen mit dem Hohlrad in Eingriff. Diese Ausführungsform zeichnet sich durch eine hohe Übersetzung, eine kompakte Bauform, einen hohen Wirkungsgrad und insbesondere durch eine sehr hohe Übertragungstreue aus.

In einer weiteren Ausgestaltung dieser Ausführungsform ist vorgesehen, daß die Zähnezahl der großen Stufenräder der Stufenplaneten der ersten Gruppe nicht ganzzahlig durch die Zähnezahl der kleinen Stufenräder der Stufenplaneten der ersten Gruppe teilbar ist. Hierdurch ist auch der radiale Abstand zwischen den kleinen Stufenräder der Stufenplaneten der zweiten Gruppe und der Getriebemittelachse einstellbar. Der radiale Abstand von der Getriebemittelachse läßt sich durch die Wahl einer bestimmten Drehstellungen bei der Montage der Stufenplaneten der ersten Gruppe einstellen, wenn die kleinen Stufenräder der Stufenplanenet der zweiten Gruppe radial fliegend in den Zahneingriffen mit den benachbarten großen Stufenrädern der Stufenplaneten der ersten Gruppe gelagert sind.

Entsprechend der radialen Einstellung des Sonnenrads, welches im aufgebauten Getriebe im Eingriff mit den großen Stufenrädern der zweiten Stufenplaneten ist, läßt sich auch hier die feinste Auflösung erzielen, wenn der größte gemeinsame Teiler der Zähnezahlen der großen und kleinen Stufenräder der Stufenplaneten der ersten Gruppe gleich eins ist.

Bei einem sehr einfach handhabbaren Einstell- und Montageverfahren wird zunächst ein Stufenplanet im Getriebe montiert, so daß eine erster Leistungszweig zwischen Antrieb (Sonnenrad) und Abtrieb (z. B. Hohlrad) geschlossen wird. In einem weiteren Schritt wird ein weiterer Stufenplanet zunächst in einer beliebigen Drehstellung montiert, wobei das große Stufenrad mit dem Sonnenrad in Eingriff gebracht wird. Dann wird der Betrag und die Richtung der Mittenabweichung des Sonnenrads gemessen. Der weitere Stufenplanet wird wieder demontiert, und um einen aus der Messung vorherbestimmten, einer Zähnezahl des kleinen Stufenrads entsprechenden Winkel verdreht wiedermontiert.

Bei einem Planetengetriebe mit parallel zur Zentralwelle angeordneten Stufenplanetenachsen, bei dem die axiale Position der Stufenplaneten individuell einstellbar ist, und die kleinen Stufenräder der Stufenplaneten konisch ausgebildet sind, wird eine optimale Einstellung des Getriebespiels und der Mittenstellung des Sonnenrads erzielt, wenn bei der ersten Montage jedes Stufenplaneten dessen axiale Position individuell so eingestellt wird, daß die Zahneingriffe an den kleinen, konischen Stufenrädern spielfrei sind.

Wenn die großen und kleinen Stufenräder der Stufenplaneten schrägverzahnt sind und unterschiedliche Steigungshöhen der Schraubenlinien der Zahnflanken aufweisen, ist auch noch ein etwa verbleibender Rest der Mittenabweichung des Sonnenrads beseitigbar.

Schließlich wird noch ein vorteilhaftes Einstell- und Montageverfahren für eine Ausgestaltung eines erfindungsgemäßen Getriebes vorgeschlagen, bei der die Zähnezahl der großen Stufenräder der Stufenplaneten der ersten Gruppe nicht ganzzahlig durch die Zähnezahl der kleinen Stufenräder der Stufenplaneten der ersten Gruppe teilbar ist. Zur Einstellung des radialen Abstands zwischen den kleinen Stufenrädern der Stufenplaneten der zweiten Gruppe und der Getriebemittelachse wird bei der Montage der Stufenplaneten der ersten Gruppe eine bestimmte Drehstellung gewählt. Auch hierbei ist es vorteilhaft, das kleine Stufenrad eines Stufenplaneten der zweiten Gruppe zunächst mit den benachbarten großen Stufenrädern der Stufenplaneten der ersten Gruppe in Eingriff zu bringen, wobei die kleinen Stufenräder der Stufenplaneten der ersten Gruppe mit dem Hohlrad in Eingriff sind. Sodann wird die Abweichung des radialen Abstands des kleinen Stufenrads der Stufenplaneten der zweiten Gruppe von der Getriebemittelachse gemessen. Einer der Stufenplaneten der ersten Gruppe wird demontiert und um einen aus der Messung vorherbestimmten, einer Zähnezahl des kleinen Stufenrads entsprechenden Winkel verdreht wiedermontiert, so daß die Abweichung des radialen Abstands von einem vorgegebenen Maß minimal ist.

Anhand der beiliegenden Zeichnungen wird die Erfindung näher erläutert, wobei

Fig. 1     eine Prinzipdarstellung der Räderanordnung einer Ausführungsform eines erfindungsgemäßen Planetengetriebes,

Fig. 2     eine Schnittdarstellung einer Ausführungsform eines erfindungsgemäßen Planetengetriebes und

Fig. 3     ein Einstellschema zur Verwendung in einem erfindungsgemäßen Montage- und Einstellverfahren

zeigen.

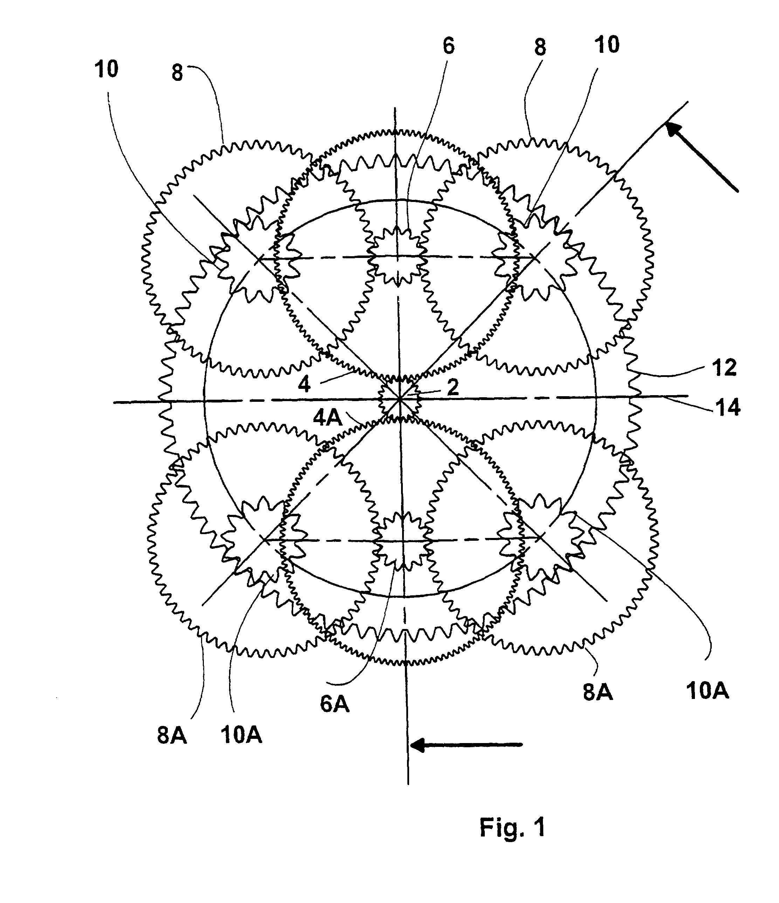

Die bezüglich der horizontalen und vertikalen Mittellinien symmetrische Prinzipdarstellung gemäß Fig. 1 zeigt das zentrale Sonnenrad 2, welches in einer Axialebene zwischen zwei großen Stufenrädern 4, 4A einer zweiten Gruppe von Stufenplaneten radial fliegend gelagert ist. Das Sonnenrad verteilt die Antriebsleistung auf die beiden Stufenräder 4, 4A, die jeweils Teil eines Leistungszweiges sind. In einer anderen Ebene stehen die kleinen Stufenräder 6, 6A dieser Stufenplaneten gleichzeitig mit einem Paar von benachbarten großen Stufenrädern 8, 8A einer ersten Gruppe von Stufenplaneten in Eingriff. In einer dritten Ebene stehen alle kleinen Stufenräder 10, 10A dieser Stufenplaneten mit dem Hohlrad 12 in Eingriff. Ein derartiges Getriebe ist bereits in der nicht vorveröffentlichten DE 197 20 255 der Anmelderin offenbart. Um Wiederholungen an dieser Stelle zu vermeiden, wird erklärt, daß der Inhalt dieser älteren Anmeldung zum Offenbarungsgehalt der vorliegenden Anmeldung gehören soll.

Das Sonnenrad 2 ist entlang der in Fig. 1 horizontal verlaufenden Linie 14 beweglich, wodurch eine sehr gleichmäßige Lastaufteilung auf die beiden Stufenräder 4, 4A erzielt wird.

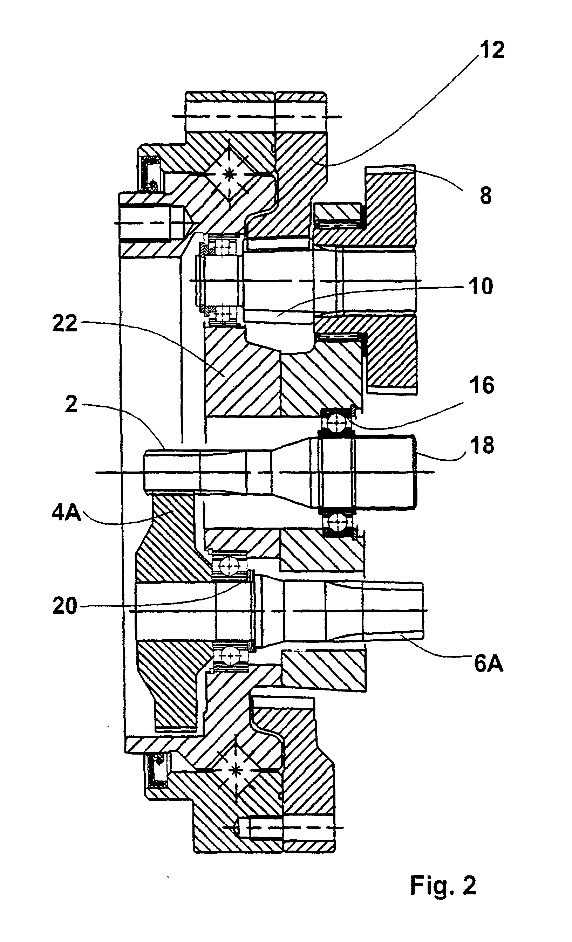

Die Zentralwelle 18 ist durch das Lager 16 (Fig. 2) in axialem Abstand vom Sonnenrad 2 gelagert. Das Lager 16 ist in begrenztem Maße winkelbeweglich ausgebildet.

Um eine ständige Exzentrizität des Sonnenrads 2 zu vermeiden, welche eine unerwünschte Schiefstellung der Zentralwelle 18 zur Folge hätte, ist bei bekannten Lösungen die relative Drehstellung der beiden Stufenräder 4, 6 eines Stufenplaneten einstellbar ausgeführt, was mit den genannten Nachteilen verbunden ist. Wenn nun - wie erfindungsgemäß vorgeschlagen - die Zähnezahien N2, N1 der großen und kleinen Stufenräder 4, 4A, 6, 6A so gewählt werden, daß die Zähnezahl der großen Stufenräder (4, 4A) nicht ganzzahlig durch die Zähnezahl der kleinen Stufenräder (6, 6A) teilbar ist, läßt sich allein durch verschiedene Drehstellungen bei der Montage eine Winkelauflösung von

$$\Lambda\alpha = \frac{360°}{N1 \times N2} \times GGT(N1, N2)$$

erzielen. In der Ausführungsform gemäß Fig. 1 weisen die kleinen Stufenräder 6, 6A die Zähnezahl N1 = 14 und die großen Stufenräder die Zähnezahl N2 = 125 auf. Der größte gemeinsame Teiler der Zähnezahlen ist 1, so daß die feinste Winkelauflösung erzielt wird. Sie ist in diesem Beispiel

$$\Lambda\alpha = \frac{360°}{14 \times 125} \times 1 \approx 0,206°.$$

Eine Verdrehung des Stufenplaneten 4, 6 um einen Zahnteilungsschritt des kleinen Stufenrads 6 entspricht 125/14 Zahnteilungsschritten des großen Stufenrads 4. Dieser Wert läßt sich darstellen als (9 - 1/14) Zahnteilungsschritte. Ausgehend von jeweils einem ersten Zahn des großen und kleinen Stufenrads ist die Winkelstellung des 9. Zahns des großen Stufenrads 4 zum 2. Zahn des kleinen Stufenrads 6 um den vierzehnten Teil eines Zahnteilungsschritts des großen Stufenrads 4 gegenüber der Winkelstellung des ersten Zahns des großen Stufenrads 4 zum ersten Zahn des kleinen Stufenrads 6 verschieden. Dieser Unterschied entspricht der Winkelauflösung $\Lambda\alpha$.

Um die kleinste Änderung der relativen Zahnstellungen bei der Zähnezahlkombination gemäß Fig. 1 zu erhalten, ist das kleine Stufenrad 6 jeweils um einen Zahnteilungsschritt zu verdrehen. Bei anderen Zähnezahlkombinationen ist das kleine Stufenrad hierzu um mehr als einen Zahnteilungsschritt zu verdrehen, beispielsweise um 3 Zahnteilungsschritte bei N1 = 17 und N2 = 125.

Fig. 2 zeigt eine Schnittdarstellung einer Ausführungsform eines erfindungsgemäßen Getriebes. Der Schnittverlauf ist in Fig. 1 durch Pfeile gekennzeichnet. Die Stufenplanetenachsen der Stufenplaneten 4, 6; 4A, 6A der zweiten Gruppe verlaufen parallel zur Zentralwelle 18. Die kleinen Stufenräder 6, 6A dieser Stufenplaneten sind konisch ausgebildet und die axiale Position der Stufenplaneten 4, 6; 4A, 6A ist mittels Einstellscheiben 20 individuell einstellbar. Hierdurch ist das Verzahnungsspiel zwischen den Stufenrädern 6, 6A und den damit kämmenden großen Stufenrädern 8, 8A der Stufenplaneten der ersten Gruppe einstellbar. Aufgrund der zylindrischen Ausbildung der Stufenräder 4, 4A und des Sonnenrads 2 wirkt sich eine axiale Verschiebung der Stufenplaneten der zweiten Gruppe nicht auf das Verzahnungsspiel zwischen den Stufenrädern 4, 4A und dem Sonnenrad 2 aus.

Bei einem vorteilhaften Montageverfahren wird zunächst nur ein Stufenplanet 4A, 6A der zweiten Gruppe mit dem Sonnenrad 2 in Eingriff gebracht, und alle am Drehmomentenfluß dieses Leisrungszweigs (2, 4A, 6A, 8A, 10A, 12) beteiligten Räder montiert. Vom zweiten Leistungszweig (2, 4, 6, 10, 12) werden zunächst die Stufenplaneten 8, 10 mit dem Hohlrad in Eingriff gebracht. Zuletzt wird der weitere Stufenplanet 4, 6 montiert. Bei der Montage der Stufenplaneten kann deren axiale Position, bzw. das Verzahnungsspiel individuell eingestellt werden. Durch die Zahneingriffe mit den großen Stufenrädern 8 der Stufenplaneten 8, 10 der ersten Gruppe ist die Zahnstellung des kleinen Stufenrads 6 vorgegeben. In der Regel werden die Zahnstellungen der Stufenräder 4, 4A bei der ersten Montage eine außermittige Position des Sonnenrads 2 bedingen. Der Wert der Mittenabweichung entspricht einem Winkel, um den die relativen Zahnstellungen der Stufenräder 4, 6 des weiteren Stufenplaneten verändert werden müssen, um eine mittige Position zu erhalten. Der weitere Stufenplanet 4, 6 wird demontiert und um einen bestimmten Winkel verdreht wiedermontiert. Der Verdrehwinkel entspricht einer bestimmten Zähnezahl des kleinen Stufenrads 6. In vorteilhafter Weise kann er beispielsweise abhängig von der zu messenden Mittenabweichung tabelliert sein.

Wenn die großen und kleinen Stufenräder 4, 6 der Stufenplaneten schrägverzahnt sind und unterschiedliche Steigungshöhen der Schraubenlinien der Zahnflanken aufweisen, kann das Einstell- und Montageverfahren vorteilhaft dadurch erweitert werden, daß bei der Wiedermontage des weiteren Stufenplaneten 4, 6 dessen axiale Position gegenüber der zuvor ermittelten, optimalen Spielfrei-Einstellung geringfügig verändert wird, um eine optimale Mitteneinstellung des Sonnenrads herzustellen.

Die kleinen Stufenräder 6, 6A der Stufenplaneten der zweiten Gruppe sind in den in Fig. 2 dargestellten Ausführungsform radial fliegend in den Zahneingriffen mit den benachbarten großen Stufenrädern 8, 8A gelagert. Die Lager 20 sind in axialem Abstand von dieser Verzahnungsebene angeordnet und sind im begrenzten Maß winkelbeweglich. Hierdurch findet auch an diesen Verzweigungsstellen ein selbsttätiger Lastausgleich statt. Bei Teilungsfehlern können die Stufenräder 6, 6A -entsprechend dem Sonnenrad 2-eine radiale Ausweichbewegung ausführen.

Wenn auch die Zähnezahlen der großen 8, 8A und kleinen 10, 10A Stufenräder der Stufenplaneten der ersten Gruppe so gewählt sind (nicht dargestellt), daß die Zähnezahl der großen Stufenräder 8, 8A nicht ganzzahlig durch die Zähnezahl der kleinen Stufenräder 10, 10A teilbar ist, ist auch der radiale Abstand der kleinen Stufenräder 6 von der Getriebemittelachse auf ein vorgegebenes Maß entsprechend einstellbar. Dies ist insbesondere bei kleinen Getrieben vorteilhaft.

Die für die Einstellung relevanten Verfahrensschritte bei der Montage der Stufenplaneneten in einem Getriebe gemäß Fig. 1 bzw. Fig. 2 können beispielsweise wie folgt ablaufen:

Nach der Montage des Hohlrads 12 und des Planetenträgers 22 werden zunächst die vier Stufenplaneten 8, 10; 8A, 10A, sowie das Sonnenrad 2 im Planetenträger montiert. Dabei wird die axiale Position der Stufenplaneten individuell so eingestellt, daß die Verzahnung zwischen jedem der konischen kleinen Stufenräder 10, bzw. 10A und dem Hohlrad jeweils spielfrei ist.

In einem nächsten Schritt wird zunächst der Stufenplanet 4A, 6A mit den benachbarten großen Stufenrädern 8A und dem Sonnenrad in Eingriff gebracht. Damit ist ein Leistungszweig zwischen Sonnenrad 2 und Hohlrad 12 geschlossen. Im vorliegenden Beispiel sind die Stufenräder 8, 10; 8A, 10A ausrechend stellungsgenau gefertigt, so daß es nicht erforderlich ist, den radialen Abstand des Stufenrads 6 von der Getriebemittelachse einzustellen.

Dann wird der Stufenplanet 4, 6 eingesteckt und mit den benachbarten großen Stufenrädern 8 in Eingriff gebracht. Gleichzeit greifen auch die Zähne des Sonnenrads 2 in die nächstliegenden freien Zahnlücken des großen Stufenrads 4 ein. In der Regel werden die Zahnstellungen der beiden großen Stufenräder 4, 4A bedingen, daß das Sonnenrad hierbei radial aus der Mitte verschoben wird.

Die Richtung sowie der Betrag der Mittenabweichung des Sonnenrads 2 wird gemessen, und der Stufenplanet 4, 6 wieder demontiert. Im nächsten Schritt muß bestimmt werden, um wieviele Zahnteilungsschritte des kleinen Stufenrads 6 der Stufenplanet 4, 6 vor der Wiedermontage verdreht werden muß, um die Mittenabweichung des Sonnenrads zu minimieren.

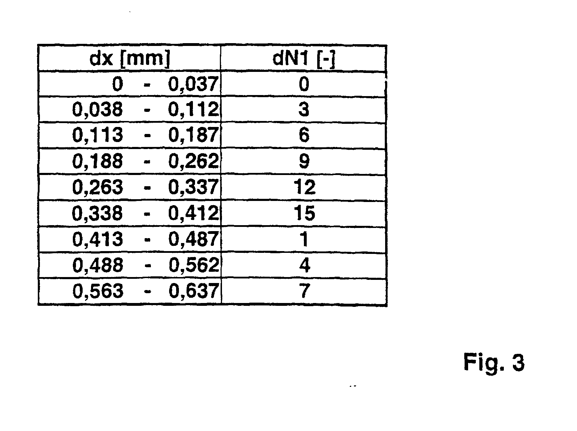

Hierzu kann eine Tabelle, wie in Fig. 3 beispielhaft dargestellt, benutzt werden. Sie ist für jeden Getriebetyp individuell zu erstellen und beruht auf geometrischen Zusammenhängen. Die Zähnezahlen sind hier $N1=17$ und $N2=125$. Die Winkelauflösung ist aus der angegebenen Formel bestimmbar, und im vorliegenden Fall näherungsweise $\Lambda\alpha \approx 0,1694°$. Der Teilkreisdurchmesser des großen Stufenrads 4 ist $D4=101,247\text{mm}$. Der kleinste Schritt, um den sich das Zentrum des Sonnenrads in radialer Richtung verschieben läßt, ergibt sich durch Linearisierung zu:

$$\frac{\Lambda\alpha}{360°} \times \frac{\pi \times D4}{2} \approx 0,075\text{mm}.$$

Abhängig vom zu messenden Wert dx der Außermittigkeit des Sonnenrads 2 ist tabelliert, um wieviele Zahnteilungsschritte dN1 des kleinen Stufenrads 6 der Stufenplanet 4, 6 vor der Wiedermontage zu verdrehen ist. Der Wert dx ist dabei positiv, wenn das Sonnenrad 2 bezogen auf Fig. 3 rechts der vertikalen Mittellinie liegt. Für positive Werte von dx ist dabei im Uhrzeigersinn zu drehen, für negative Werte von dx gegen den Uhrzeigersinn. Zur Erstellung der Tabelle sind lediglich die Zähnezahlen N1 und N2, sowie der Teilkreisdurchmesser des großen Stufenrads 4 notwendig.

Die Tabelle zeigt lediglich 8 der insgesamt 17 Einstellmöglichkeiten. Wenn ein größerer Wert für dx gemessen wird, so kann beim Einstecken des eine benachbarte Zahnlükke des großen Stufenrads 4 gefunden werden kann, für die der Betrag von dx kleiner ist.

Bemerkenswert ist, daß in diesem Beispiel um jeweils drei Zahnteilungsschritte verdreht werden muß, um die kleinste Änderung der Stellung des Sonnenrads zu erzielen.

Bezugszeichen

| | |
|---|---|
| 2 | Sonnenrad |
| 4 | großes Stufenrad (zweite Gruppe von Stufenplaneten) |
| 4A | großes Stufenrad (zweite Gruppe von Stufenplaneten) |
| 6 | kleines Stufenrad (zweite Gruppe von Stufenplaneten) |
| 6A | kleines Stufenrad (zweite Gruppe von Stufenplaneten) |
| 8 | großes Stufenrad (erste Gruppe von Stufenplaneten) |
| 8A | großes Stufenrad (erste Gruppe von Stufenplaneten) |
| 10 | kleines Stufenrad (erste Gruppe von Stufenplaneten) |
| 10A | kleines Stufenrad (erste Gruppe von Stufenplaneten) |
| 12 | Hohlrad |
| 14 | horizontale Linie |
| 16 | Lager |
| 18 | Zentralwelle |
| 20 | Einstellscheibe |
| 22 | Planetenträger |

| | |
|---|---|
| N1 | Zähnezahl der kleinen Stufenräder 6, 6A |
| N2 | Zähnezahl der großen Stufenräder 4, 4A |
| dN1 | Anzahl der Zahnteilungsschritte dN1 kleinen Stufenrads 6 um die der Stufenplanet 4, 6 vor der Wiedermontage zu verdrehen ist |
| dx | zu messender Wert der Außermittigkeit des Sonnenrads 2 |

**Patentansprüche**

1.  Planetengetriebe mit einem auf einer Zentralwelle (18) angeordneten Sonnenrad (2), mindestens einem Hohlrad (12), einem Planetenträger (22) mit einer darin gelagerten Gruppe von Stufenplaneten mit großen und kleinen Stufenrädern (4, 6; 4A, 6A), deren große Stufenräder (4, 4A) mit dem Sonnenrad (2) in Eingriff stehen, wobei das Sonnenrad (2) radial fliegend in den Zahneingriffen mit den großen Stufenrädern (4, 4A) gelagert ist, **dadurch gekennzeichnet, daß** die Zähnezahl der großen Stufenräder (4, 4A) nicht ganzzahlig durch die Zähnezahl der kleinen Stufenräder (6, 6A) teilbar ist, um eine radiale Einstellbarkeit des Sonnenrads allein durch verschiedene Drehstellungen bei der Montage der Stufenplaneten (4, 6) zu erzielen.

2.  Planetengetriebe nach Anspruch 1, **dadurch gekennzeichnet, daß** daß der größte gemeinsame Teiler der Zähnezahlen der großen und kleinen Stufenräder gleich eins ist.

3.  Planetengetriebe nach Anspruch 1 oder 2, **dadurch gekennzeichnet, daß** die Zentralwelle (18) in axialem Abstand vom Sonnenrad (2) durch ein in begrenztem Maß winkelbewegliches Lager (16) gelagert ist, um eine radiale Ausweichbewegung des Sonnenrads (2) zu ermöglichen.

4.  Planetengetriebe nach einem der Ansprüche 1 bis 3, **dadurch gekennzeichnet, daß** die Stufenplanetenachsen parallel zur Zentralwelle (18) sind, die axiale Position der Stufenplaneten (4, 6; 4A, 6A) individuell einstellbar ist, das Sonnenrad (2) und die großen Stufenräder (4, 4A) der Stufenplaneten zylindrisch ausgebildet sind und die kleinen Stufenräder (6, 6A) der Stufenplaneten konisch ausgebildet sind, um eine Spieleinstellbarkeit zu ermöglichen.

5.  Planetengetriebe nach Anspruch 4, **dadurch gekennzeichnet, daß** die großen und kleinen Stufenräder (4, 4A; 6, 6A) der Stufenplaneten schrägverzahnt sind und unterschiedliche Steigungshöhen der Schraubenlinien der Zahnflanken aufweisen, um eine Feineinstellbarkeit der Mittenstellung des Sonnenrads (2) zu ermöglichen.

6.  Planetengetriebe nach Anspruch 4, **dadurch gekennzeichnet, daß** die großen und kleinen Stufenräder (4, 4A; 6, 6A) der Stufenplaneten gleiche Steigungshöhen der Schraubenlinien der Zahnflanken aufweisen.

7.  Planetengetriebe nach einem der Ansprüche 1 bis 6, **dadurch gekennzeichnet, daß** zwei Gruppen von Stufenplaneten vorgesehen sind, wobei alle Stufenplaneten (4, 6; 4A, 6A; 8, 10; 8A, 10A) in dem gemeinsamen Planetenträger (22) gelagert sind, die Anzahl der Stufenplaneten der zweiten Gruppe (4, 6; 4A, 6A) der halben Anzahl der Stufenplaneten der ersten Gruppe (8, 10; 8A, 10A) entspricht, die großen Stufenräder (4, 4A) der Stufenplaneten der zweiten Gruppe mit dem Sonnenrad (2) in Eingriff stehen, die kleinen Stufenräder (6, 6A) der Stufenplaneten der zweiten Gruppe gleichzeitig mit einem Paar von benachbarten großen Stufenrädern (8, 8A) der Stufenplaneten der ersten Gruppe in Eingriff stehen und alle kleinen Stufenräder (10, 10A) der Stufenplaneten der ersten Gruppe mit dem Hohlrad (12) in Eingriff stehen.

**8.** Planetengetriebe nach Anspruch 7, **dadurch gekennzeichnet, daß** die Zähnzahl der großen Stufenräder (8, 8A) der Stufenplaneten der ersten Gruppe nicht ganzzahlig durch die Zähnezahl der kleinen Stufenräder (10, 10A) der Stufenplaneten der ersten Gruppe teilbar ist, um eine radiale Einstellbarkeit der kleinen Stufenräder (6, 6A) der Stufenplaneten der zweiten Gruppe allein durch verschiedene Drehstellungen bei der Montage der Stufenplaneten (8, 10; 8A, 10A) zu erzielen.

**9.** Planetengetriebe nach Anspruch 8, **dadurch gekennzeichnet, daß** der größte gemeinsame Teiler der Zähnezahlen der großen und kleinen Stufenräder (8, 8A; 10, 10A) der Stufenplaneten der ersten Gruppe gleich eins ist.

**10.** Einstell- und Montageverfahren für ein Planetengetriebe gemäß einem der Ansprüche 1 bis 9, **dadurch gekennzeichnet, daß** zunächst ein Stufenplanet (4A, 6A) mit dem Sonnenrad (2) in Eingriff gebracht und montiert wird und alle am Drehmomentenfluß des Leistungszweigs dieses Stufenplaneten (4A, 6A) beteiligten Verzahnungen (4A, 6A, 8A, 10A, 12) in Eingriff gebracht werden, und beim Hinzufügen eines weiteren Stufenplaneten (4, 6) dessen Drehstellung so gewählt wird, daß die radiale Mittenabweichung des Sonnenrads (2) minimal ist.

**11.** Einstell- und Montageverfahren nach Anspruch 10, **dadurch gekennzeichnet, daß** der weitere Stufenplanet (4, 6) zunächst in einer beliebigen Drehstellung montiert wird, Betrag und Richtung der Mittenabweichung des Sonnenrads (2) gemessen werden, der weitere Stufenplanet (4, 6) wieder demontiert wird, und um einen aus der Messung vorherbestimmten, einer Zähnezahl des kleinen Stufenrads (6) entsprechenden Winkel verdreht wiedermontiert wird.

**12.** Einstell- und Montageverfahren nach Anspruch 11 für ein Planetengetriebe gemäß Anspruch 4, **dadurch gekennzeichnet, daß** bei der ersten Montage jedes Stufenplaneten (4, 6; 4A, 6A) dessen axiale Position individuell so eingestellt wird, daß die Zahneingriffe an den kleinen konischen Stufenrädern (6, 6A) spielfrei sind.

**13.** Einstell- und Montageverfahren nach Anspruch 12 für ein Planetengetriebe gemäß Anspruch 5, **dadurch gekennzeichnet, daß** bei der Wiedermontage des weiteren Stufenplaneten (4, 6) dessen axiale Position gegenüber der zuvor ermittelten, optimal spielfreien Einstellung geringfügig verändert wird, um eine optimale Mitteneinstellung des Sonnenrads (2) herzustellen.

**14.** Einstell- und Montageverfahren für ein Planetengetriebe nach Anspruch 8 oder 9, **dadurch gekennzeichnet, daß** die Drehstellung der Stufenplaneten der ersten Gruppe so gewählt wird, daß die Abweichung der radialen Abstände zwischen den kleinen Stufenrädern (6) der Stufenplaneten der zweiten Gruppe und der Getriebemittelachse von einem vorgegebenen Maß minimal ist.

**Claims**

**1.** Planetary gear comprising a sun wheel (2) disposed on a central shaft (18), at least one ring gear (12), a planet carrier (22), supported in which is a group of step planets with large and small step wheels (4, 6; 4A, 6A), the large step wheels (4, 4A) of which are in mesh with the sun wheel (2), wherein the sun wheel (2) is radially over-mounted in the meshings with the large step wheels (4, 4A), **characterized in that** the tooth number of the large step wheels (4, 4A) is not integrally divisible by the tooth number of the small step wheels (6, 6A) in order to achieve a radial adjustability of the sun wheel solely through various rotary positions during assembly of the step planets (4, 6).

**2.** Planetary gear according to claim 1, **characterized in that** the highest common divisor of the tooth numbers of the large and small step wheels equals one.

**3.** Planetary gear according to claim 1 or 2, **characterized in that** the central shaft (18) is supported at an axial distance from the sun wheel (2) by means of a bearing (16) capable of limited angular movement in order to enable a radial deflection movement of the sun wheel (2).

**4.** Planetary gear according to one of claims 1 to 3, **characterized in that** the step planet axes are parallel to the central shaft (18), the axial position of the step planets (4, 6; 4A, 6A) is individually adjustable, the sun wheel (2) and the large step wheels (4, 4A) of the step planets are of a cylindrical construction and the small step wheels (6, 6A) of the step planets are of a conical construction in order to achieve a play adjustment facility.

**5.** Planetary gear according to claim 4, **characterized in that** the large and small step wheels (4, 4A; 6, 6A) of the step planets are helically cut and have differing leads of the helixes of the tooth flanks in order to enable fine adjustability of the central position of the sun wheel (2).

**6.** Planetary gear according to claim 4, **characterized in that** the large and small step wheels (4, 4A; 6, 6A) of the step planets have identical leads of the helixes of the tooth flanks.

7. Planetary gear according to one of claims 1 to 6, **characterized in that** two groups of step planets are provided, wherein all of the step planets (4, 6; 4A, 6A; 8, 10; 8A, 10A) are supported in the common planet carrier (22), the number of step planets of the second group (4, 6; 4A, 6A) corresponds to half the number of step planets of the first group (8, 10; 8A, 10A), the large step wheels (4, 4A) of the step planets of the second group are in mesh with the sun wheel (2), the small step wheels (6, 6A) of the step planets of the second group are simultaneously in mesh with a pair of adjacent large step wheels (8, 8A) of the step planets of the first group and all of the small step wheels (10, 10A) of the step planets of the first group are in mesh with the ring gear (12).

8. Planetary gear according to claim 7, **characterized in that** the tooth number of the large step wheels (8, 8A) of the step planets of the first group is not integrally divisible by the tooth number of the small step wheels (10, 10A) of the step planets of the first group in order to achieve a radial adjustability of the small step wheels (6, 6A) of the step planets of the second group solely through various rotary positions during assembly of the step planets (8, 10; 8A, 10A).

9. Planetary gear according to claim 8, **characterized in that** the highest common divisor of the tooth numbers of the large and small step wheels (8, 8A; 10, 10A) of the step planets of the first group equals one.

10. Adjusting and assembly method for a planetary gear according to one of claims 1 to 9, **characterized in that** first a step planet (4A, 6A) is brought into mesh with the sun wheel (2) and assembled and all of the gearings (4A, 6A, 8A, 10A, 12) involved in the torque flow of the power branch of said step planet (4A, 6A) are brought into mesh, and, when adding a further step planet (4, 6), the rotary position of the latter is selected in such a way that the radial eccentricity of the sun wheel (2) is minimal.

11. Adjusting and assembly method according to claim 10, **characterized in that** the further step planet (4, 6) is initially assembled in an arbitrary rotary position, the amount and direction of the eccentricity of the sun wheel (2) is measured, the further step planet (4, 6) is disassembled and is reassembled rotated through an angle, which is predetermined from the measurement and corresponds to a tooth number of the small step wheel (6).

12. Adjusting and assembly method according to claim 11 for a planetary gear according to claim 4, **characterized in that**, during the initial assembly of each step planet (4, 6; 4A, 6A), its axial position is individually adjusted in such a way that the meshings at the small conical step wheels (6, 6A) are free of play.

13. Adjusting and assembly method according to claim 12 for a planetary gear according to claim 5, **characterized in that**, during reassembly of the further step planet (4, 6), its axial position is varied slightly relative to the previously determined, optimally play-free adjustment in order to produce an optimum central adjustment of the sun wheel (2).

14. Adjusting and assembly method for a planetary gear according to claim 8 or 9, **characterized in that** the rotary position of the step planets of the first group is selected in such a way that the deviation of the radial distances between the small step wheels (6) of the step planets of the second group and the gear centre line from a defined dimension is minimal.

**Revendications**

1. Train épicycloïdal comprenant une roue planétaire (2) disposée sur un arbre central (18), au moins une couronne à denture intérieure (12), un porte-satellites (22) dans lequel tourillonnent un groupe de satellites étagés pourvus de grandes dentures et de petites dentures (4, 6 ; 4A, 6A) dont les grandes dentures (4, 4A) sont en prise avec la roue planétaire (2), dans lequel la roue planétaire (2) est montée flottante dans la direction radiale dans les engrènements avec les grandes dentures (4, 4A), **caractérisé en ce que** le nombre de dents des grandes dentures (4, 4A) n'est pas divisible par le nombre de dents des petites dentures (6, 6A) avec un quotient entier, ceci afin d'obtenir une possibilité de réglage de la roue planétaire uniquement par les différentes positions de rotation lors du montage des pignons satellites étagés (4, 6).

2. Train épicycloïdal selon la revendication 1, **caractérisé en ce que** le plus grand diviseur commun des nombres de dents des grandes et petites dentures est égal à un.

3. Train épicycloïdal selon la revendication 1 ou 2, **caractérisé en ce que** l'arbre central (18) est tourillonné, à une certaine distance axiale de la roue planétaire (2), par un palier (16) mobile en angle à un degré limité, pour permettre un mouvement radial de compensation de la roue planétaire (2).

**4.** Train épicycloïdal selon l'une des revendications 1 à 3, **caractérisé en ce que** les axes des satellites étagés sont parallèles à l'arbre central (18), la position axiale des satellites étagés (4, 6 ; 4A, 6A) peut être réglée individuellement, la roue planétaire (2) et les grandes dentures (4, 4A) des satellites étagés sont cylindriques et les petites dentures (6, 6A) des satellites étagés sont coniques, pour permettre une possibilité de réglage du jeu.

**5.** Train épicycloïdal selon la revendication 4, **caractérisé en ce que** les grandes et petites dentures (4, 4A ; 6, 6A) des satellites étagés sont à denture oblique et comportent sur les flancs des dents des lignes hélicoïdales de pas différents, pour permettre une possibilité de réglage fin de la position centrale de la roue planétaire (2).

**6.** Train épicycloïdal selon la revendication 4, **caractérisé en ce que** les grande et petites dentures (4, 4A ; 6, 6A) des satellites étagés ont les mêmes pas que les lignes hélicoïdales des flancs de dents.

**7.** Train épicycloïdal selon l'une des revendications 1 à 6, **caractérisé en ce qu'**il est prévu deux groupes de satellites étagés, tous les satellites étagés (4, 6 ; 4A, 6A ; 8, 10 ; 8A, 10A) étant tourillonnés dans le porte-satellites commun (22), le nombre des satellites étages du deuxième groupe (4, 6 ; 4A, 6A) correspondant à la moitié du nombre des satellites étagés du premier groupe (8, 10 ; 8A, 10A), les grandes dentures (4, 4A) des satellites étagés du deuxième groupe étant en prise avec la roue planétaire (2), les petites dentures (6, 6A) des satellites étagés du deuxième groupe étant en prise en même temps avec une paire de grandes dentures voisines (8, 8A) des satellites étagés du premier groupe et toutes les petites dentures (10, 10A) des satellites étagés du premier groupe étant en prise avec la couronne à denture intérieure (12).

**8.** Train épicycloïdal selon la revendication 7, **caractérisé en ce que** le nombre de dents des grandes dentures (8, 8A) des satellites étagés du premier groupe n'est pas divisible par le nombre de dents des petites dentures (10, 10A) des satellites étagés du premier groupe, ceci afin d'obtenir une possibilité de réglage radial des petites dentures (6, 6A) des satellites étages du deuxième groupe, uniquement par différentes positions de rotation lors du montage des satellites étagés (8, 10 ; 8A, 10A).

**9.** Train épicycloïdal selon la revendication 8, **caractérisé en ce que** le plus grand diviseur commun des nombres de dents des grandes et petites dentures (8, 8A ;10, 10A) des satellites étagés du premier groupe est égal à un.

**10.** Procédé de réglage et de montage pour un train épicycloïdal selon l'une des revendications 1 à 9, **caractérisé en ce que**, tout d'abord, on met un satellite étagé (4A, 6A) en prise avec la roue planétaire (2) et on le monte, puis on met en prise toutes les dentures (4A, 6A, 8A, 10A, 12) qui participent au flux du couple de la branche de puissance de ce satellite étagé (4A, 6A) et, **en ce que**, lors de l'ajout d'un autre satellite étagé (4, 6), on choisit sa position angulaire de manière que le décentrage radial de la roue planétaire (2) soit minime.

**11.** Procédé de réglage et de montage selon la revendication 10, **caractérisé en ce que** l'on monte initialement l'autre satellite étagé (4, 6) dans une position de rotation quelconque, on mesure l'amplitude et la direction du décentrage de la roue planétaire (2), on démonte de nouveau l'autre satellite étagé (4, 6) et on le remonte dans une position tournée d'un angle qui est prédéterminé sur la base de la mesure et qui correspond à un nombre de dents de la petite denture (6).

**12.** Procédé de réglage et de montage selon la revendication 11, pour un train épicycloïdal selon la revendication 4, **caractérisé en ce que**, lors du premier montage de chaque satellite étagé (4, 6 ; 4A, 6A), on règle individuellement sa position axiale de manière que les engrènements sur les petites dentures coniques (6, 6A) soient dépourvus de jeu.

**13.** Procédé de réglage et montage selon la revendication 12 pour un train épicycloïdal selon la revendication 5, **caractérisé en ce que**, lors du remontage de l'autre satellite étagé (4, 6), on modifie légèrement sa position axiale par rapport au réglage optimal sans jeu obtenu précédemment, pour obtenir un réglage centré optimal de la roue planétaire (2).

**14.** Procédé de réglage et de montage pour un train épicycloïdal selon la revendication 8 ou 9, **caractérisé en ce que** l'on choisit la position angulaire des satellites du premier groupe de manière que l'écart que les distances radiales présentent entre les petites dentures (6) des satellites étagés du deuxième groupe et l'axe central du train par rapport à une valeur prédéterminée soit minime.

Fig. 1

12

8

10

22

16

2

18

4A

20

6A

Fig. 2

| dx [mm] | | | dN1 [-] |
|---|---|---|---|
| 0 | - | 0,037 | 0 |
| 0,038 | - | 0,112 | 3 |
| 0,113 | - | 0,187 | 6 |
| 0,188 | - | 0,262 | 9 |
| 0,263 | - | 0,337 | 12 |
| 0,338 | - | 0,412 | 15 |
| 0,413 | - | 0,487 | 1 |
| 0,488 | - | 0,562 | 4 |
| 0,563 | - | 0,637 | 7 |

Fig. 3